# EUROPÄISCHE PATENTSCHRIFT

(11) **EP 1 214 012 B1**
(45) Veröffentlichungstag und Bekanntmachung des Hinweises auf die Patenterteilung: **20.10.2004**
(21) Anmeldenummer: 00958178.6
(22) Anmeldetag: 26.07.2000
(51) Int. Cl.: A61C 3/06

(54) **ZAHNSCHLEIFKÖRPER ZUR BEHANDLUNG EINES ENGSTANDES VON ZÄHNEN**
SMOOTHING BODY FOR TREATING A CROWDING OF TEETH
CORPS ABRASIF DENTAIRE POUR LE TRAITEMENT D'UN CHEVAUCHEMENT DE DENTS

(30) Priorität: 13.09.1999 DE 19943868
(43) Veröffentlichungstag der Anmeldung: 19.06.2002
(73) Patentinhaber: Kubein-Meesenburg, Dietmar, 37075 Göttingen (DE); Ihlow, Dankmar, 23730 Sierksdorf (DE); Nägerl, Hans, Dr., 37130 Gleichen (DE)
(72) Erfinder: Kubein-Meesenburg, Dietmar, 37075 Göttingen (DE); Ihlow, Dankmar, 23730 Sierksdorf (DE); Nägerl, Hans, Dr., 37130 Gleichen (DE)
(74) Vertreter: Scheffler, Jörg, Dipl.-Ing.
(86) Internationale Anmeldenummer: PCT/DE2000/002469
(87) Internationale Veröffentlichungsnummer: WO 2001/019278

(56) Entgegenhaltungen:
- DE-C- 652 270
- DE-C- 897 473

## Beschreibung

Die Erfindung bezieht sich auf einen Zahnschleifkörper zur Behandlung eines Engstandes von Zähnen, der in die Zahnzwischenräume einführbar und beidseitig mit sich gegenüberliegenden Arbeitsflächen versehen ist und der einen Schaft zur Befestigung an einem Hubantrieb aufweist.

Eine Behandlungsmethode eines Engstandes von Zähnen besteht darin, die Rotationen mittels einer festen oder herausnehmbaren Apparatur zu beseitigen. Hier ist jedoch die Rezidivrate relativ hoch. Es ist auch bereits bekannt, mittels eines Zahnschleifkörpers, der in die Zahnzwischenräume horizontal, d. h. quer zur Längsrichtung der Zähne eingeführt wird, durch eine horizontale Abrasionsbewegung Zahnsubstanz im interdentalen Kontaktbereich abzutragen. Hierbei wird Platz zwischen den Zähnen geschaffen. Nachteilig bei der Anwendung dieser bekannten Zahnschleifkörper ist es, daß die horizontale Abrasionsbewegung für die Patienten unangenehm oder schmerzhaft ist und daß diese Methoden nur plane Abrasionsflächen entstehen lassen.

DE-C-652 270 offenbart einen Zahnschleifkörper gemäß dem Oberbegriff des Anspruchs 1.

Der Erfindung liegt die Aufgabe zugrunde, einen Zahnschleifkörper zur Behandlung eines Engstandes von Zähnen zur Verfügung zu stellen, mit dem prophylaktisch eine Kontakt- und Stellungsstabilität der Zähne erzeugt werden kann.

Diese Aufgabe wird durch die Merkmale des Anspruchs 1 gelöst. Der erfindungsgemäße Zahnschleifkörper ist zwischen die Zähne vertikal, d. h. in deren Längsrichtung einführbar und für eine Abrasionsbewegung in dieser Richtung ausgebildet, wobei die eine Arbeitsfläche im Querschnitt konvex geformt ist und die gegenüberliegende Arbeitsfläche im Querschnitt konkav geformt ist, wobei der Radius der konvex gekrümmten Arbeitsfläche größer ist, als der Radius der konkav gekrümmten Arbeitsfläche.

Bei einem natürlichen Gebiß liegen die Zähne mit konvexen Flächen nebeneinander. Somit ist bei natürlichen Zähnen der interdentale Kontakt auf eine dimere Gelenkkette abbildbar. Nachteilig ist es, daß eine solche gestreckte dimere Gelenkkette instabil ist, was zu einer Rotation der Zähne gegeneinander führt, sofern im Zahnbogen zu wenig Platz vorhanden ist.

Mit dem erfindungsgemäßen Zahnschleifkörper kann ein vorteilhafter interdentaler Kontakt in Form einer überschlagenen dimeren Zahnbogengelenkkette erzeugt werden. Dabei wird durch die konvexe Arbeitsfläche des Zahnschleifkörpers im Kontaktbereich des einen Zahnes eine konkave Kontaktfläche geformt. Durch die konkave Arbeitsfläche des Zahnschleifkörpers wird in der Regel gleichzeitig die an sich bereits vorhandene konvexe Kontaktfläche des benachbarten Kontaktzahnes in ihrem Radius an die konkave Kontaktfläche angepaßt, wobei die konkave Kontaktfläche einen größeren Radius aufweist als die konvexe Kontaktfläche.

Durch eine nicht abrasive Ausbildung der konkaven Arbeitsfläche des Zahnschleifkörpers ist es aber auch möglich, diese lediglich als Führungsfläche wirkend einzusetzen, so daß bei Eignung die konvexe Kontaktfläche des Zahnes, wie sie bereits natürlicherweise gegeben ist, beibehalten wird.

Die durch die Einarbeitung der konkaven und konvexen Kontaktflächen im interdentalen Bereich geschaffene überschlagene dimere Zahnbogengelenkkette zeichnet sich aufgrund der formschlüssig ineinandergreifenden Verbindung der Kontaktflächen durch eine sehr hohe Druckstabilität aus, wodurch eine Kontakt- und Stellungsstabilität der benachbarten Zähne erhöht wird. Diese Stabilität bewirkt einen Rezidivschutz nach einer Korrektur der Zahnstellungen und verhindert bzw. reduziert einen tertiären Engstand.

Ein weiterer Vorteil der Behandlung mit dem erfindungsgemäßen Zahnschleifkörper besteht darin, daß an den Kontaktflächen der Zähne lediglich ein minimaler Abtrag des approximalen Schmelzes erforderlich ist, um eine physikalische Stabilität in jedem Kontakt und damit z. B. im Frontzahnbogen zu erhalten. Der daraus resultierende Platrgewinn beträgt je Kontaktfläche 0,25 bis 0,35 mm. Die entstehenden künstlichen konkav-konvexen Abrasionen gestalten die Kontakte zu einer überschlagenen stabilen dimeren Gelenkkette um. Außerdem ist eine vertikale Abrasionsbewegung weniger schmerzhaft als eine horizontale Abrasionsbewegung.

Vorzugsweise sind beide Arbeitsflächen des Zahnschleifkörpers diamantiert, um an den Zähnen im interdentalen Bereich ein gleichzeitiges präzises Einarbeiten der korrespondierenden konkaven und konvexen Kontaktflächen zu ermöglichen. Alternativ ist, sofern die natürliche konvexe Krümmung der Kontaktfläche eines Zahnes ohne Bearbeitung beibehalten werden kann, nur die konvexe Arbeitsfläche des Zahnschleifkörpers zur Ausbildung der konkaven Kontaktfläche eines Zahnes diamantiert.

Gemäß einer bevorzugten Ausführungsform ist der vordere Rand des Zahnschleifkörpers nicht diamantiert, um ein Einführen des Zahnschleifkörpers zwischen die Zähne zu erleichtern. Aus demselben Grunde kann es vorteilhaft sein, wenn der Vorderrand des Zahnschleifkörpers angespitzt ist.

Zwei Ausführungsbeispiele der Erfindung sind in der Zeichnung dargestellt und werden im folgenden näher beschrieben: Es zeigen:
Figur 1, eine Draufsicht auf einen Zahnschleifkörper;
Figur 2, den Zahnschleifkörper gem. Figur 1, in der Seitenansicht;
Figur 3, eine Draufsicht von oben auf den Zahnschleifkörper, gem. Figur 1;
Figur 4, einen Querschnitt, gem. A-B, durch den Zahnschleifkörper, gem. Figur 1;
Figur 5, eine Zahnschleifkörper mit schmalen Arbeitsflächen, die mit kleineren Radien versehen sind;
Figur 6, eine Seitenansicht des Zahnschleifkörpers, gem. Figur 5;
Figur 7, einen Querschnitt, gem. der Linie A-B, der Figur 6;
Figur 8, eine stabilisierte Zahnreihe in der Draufsicht.

In der Zeichnung ist mit 1 ein Zahnschleifkörper bezeichnet, der beidseitig mit sich gegenüberliegenden Arbeitsflächen 2 und 3 versehen ist. Die Arbeitsfläche 2 ist konkav, und die Arbeitsfläche 3 ist konvex ausgebildet, wobei die Krümmung der Arbeitsfläche 3 einen Radius R3 aufweist, der größer ist, als ein Radius R2 der Krümmung der Arbeitsfläche 2.

Die Arbeitsflächen 2 und 3 sind mit einem Schleifmittel 4 belegt, bei dem es sich vorzugsweise um einen Diamantbelag handelt. Der Zahnschleifkörper 1 ist im Bereich eines vorderen Randes 5 angespitzt ausgebildet, was das Einführen der Arbeitsflächen 2 und 3 in Zahnzwischenräume 10 erleichtert.

Der Zahnschleaifkörper 1 weist einen Schaft 6 auf, an dessen Rastausnehmung 7 ein in der Zeichnung schematisch dargestellter Hubantrieb 8, vorzugsweise ein Winkelhubantrieb, befestigbar ist. Mittels des Hubantriebs 8 kann der Zahnschleifkörper 1 in seiner Längsrichtung in eine Abrasionsbewegung versetzt werden.

Der Zahnschleifkörper 1 wird zur Behandlung eines Engstandes zwischen Zähne 9 vertikal, d. h. in deren Längsrichtung eingeführt. Über den Hubantrieb 8 wird sodann in den Zahnschleifkörper 1 in dessen Längsrichtung eine lineare Abrasionsbewegung eingeleitet. Aufgrund der Abrasionsbewegung werden durch die Arbeitsflächen 1 und 2 im Kontaktbereich jeweils zweier Zähne 9 eine konkave Kontaktfläche 11 und eine konvexe Kontaktfläche 12 geformt, die nach Beendigung der Behandlung ineinandergreifen. Es wird so ein interdentaler Kontakt in Form einer überschlagenen dimeren Zahnbogengelenkkette erzeugt, die sich durch eine sehr hohe Druckstabilität auszeichnet. Hierdurch ist eine Kontakt- und Stellungsstabilität der benachbarten Zähne 9 gewährleistet. Diese Stabilität bewirkt einen Rezidivschutz nach einer Korrektur der Zahnstellungen und verhindert bzw. reduziert einen tertiären Engstand.

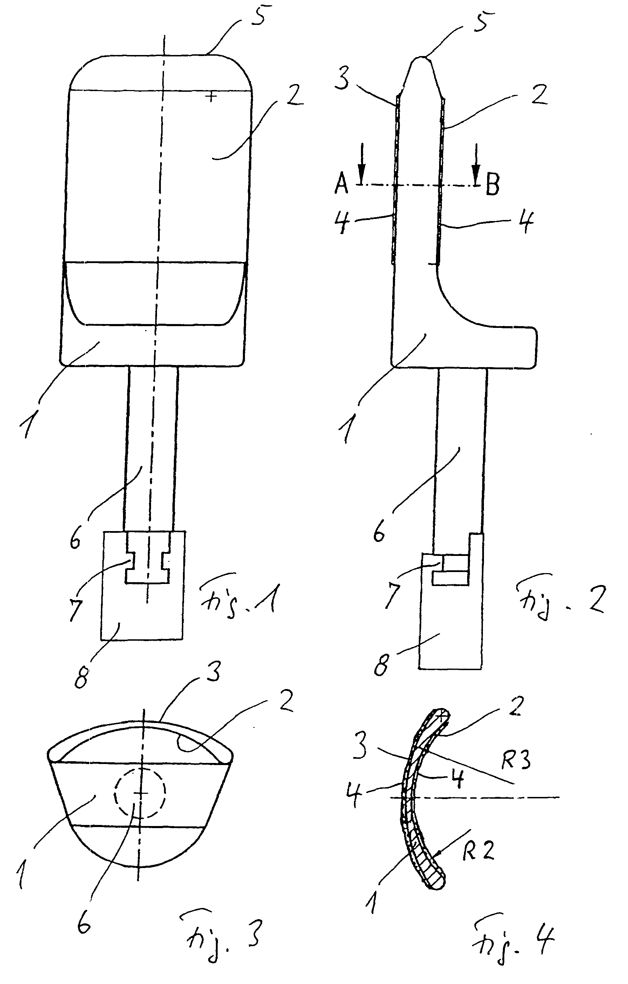

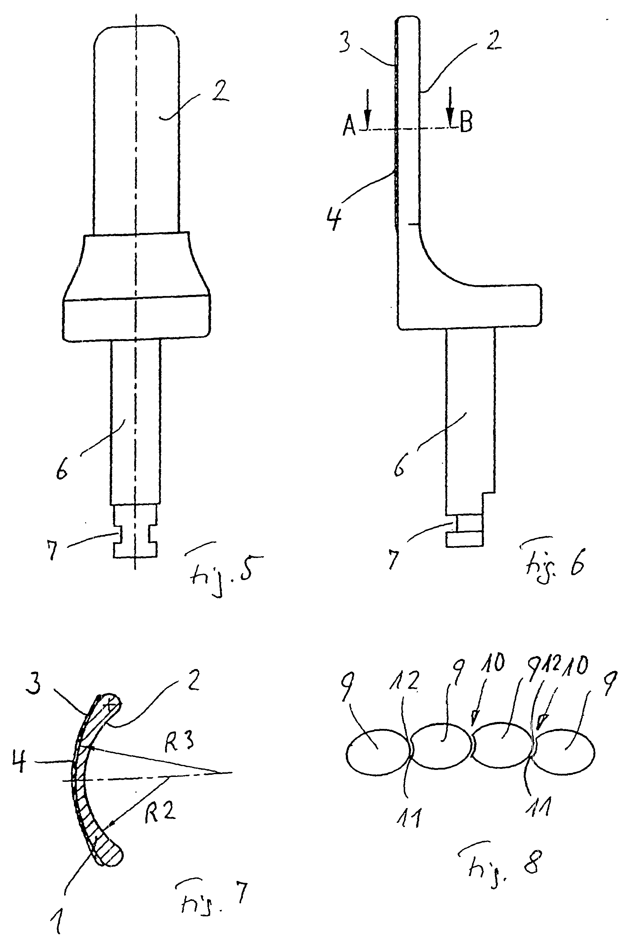

In den Figuren 5 bis 7 der Zeichnung ist ein Zahnschleifkörper 1 mit in ihrer Breite reduzierten Arbeitsflächen 2 und 3 dargestellt. Die Arbeitsflächen 2 und 3 weisen außerdem kleinere Radien R2 und R3 auf, als das Ausführungsbeispiel gemäß der Figur 1. Es ist hier im übrigen nur die konvexe Arbeitsfläche 3 mit einem Schleifmittel 4 belegt. Die konkave Arbeitsfläche 2 wirkt hier lediglich als Führungsfläche an der natürlichen konvexen Kontaktfläche 12 des während der Behandlung zur Anlage kommenden Zahnes 9. Die natürliche konvexe Krümmung dieser Kontaktfläche 12 bleibt erhalten. Es wird lediglich in den gegenüberliegenden Zahn im Kontaktbereich eine konkave Kontaktfläche 11 mit dem Radius R3 der konvexen Arbeitsfläche 3 des Zahnschleifkörpers 1 eingearbeitet. Auch hier erfolgt der lineare Antrieb des Zahnschleifkörpers 1 mittels eines an der Rastausnehmung 7 des Schaftes 6 befestigten Hubantriebes 8.

## Patentansprüche

1. Zahnschleifkörper (1) zur Behandlung eines Engstandes von Zähnen (9), der in Zahnzwischenräume (10) einführbar und beidseitig mit sich gegenüberliegenden Arbeitsflächen (2, 3) versehen ist und der einen Schaft (6) zur Befestigung an einem Hubantrieb (8) aufweist, wobei der Zahnschleifkörper (1) zwischen die Zähne (9) vertikal, d. h. in deren Längsrichtung einführbar und für eine Abrasionsbewegung in dieser Richtung ausgebildet ist, und wobei die eine Arbeitsfläche (3) im Querschnitt konvex geformt ist und die gegenüberliegende Arbeitsfläche (2) im Querschnitt konkav geformt ist, **dadurch gekennzeichnet, daß** der Radius (R3) der konvexen Arbeitsfläche (3) größer ist, als der Radius (R2) der konkaven Arbeitsfläche (2).

2. Zahnschleifkörper (1) nach Anspruch 1, **dadurch gekennzeichnet, daß** die Arbeitsflächen (2, 3) mit einem Schleifmittel (4) belegt sind.

3. Zahnschleifkörper (1) nach Anspruch 1, **dadurch gekennzeichnet, daß** nur die konvexe Arbeitsfläche (3) mit einem Schleifmittel (4) belegt ist.

4. Zahnschleifkörper (1) nach einem der vorhergehenden Ansprüche, **dadurch gekennzeichnet, daß** das Schleifmittel (4) ein Diamantbelag ist.

5. Zahnschleifkörper (1) nach einem der vorhergehenden Ansprüche, **dadurch gekennzeichnet, daß** ein vorderer Rand (5) des Zahnschleifkörpers (1), mit dem dieser zwischen die Zähne (9) einführbar ist, frei von Schleifmittel (4) ist.

6. Zahnschleifkörper (1) nach einem der vorhergehenden Ansprüche, **dadurch gekennzeichnet, daß** der vordere Rand (5) des Zahnschleifkörpers (1), mit dem dieser zwischen die Zähne (9) einführbar ist, angespitzt ist.

## Claims

1. Dental abrading body (1) for treating tooth (9) crowding, which abrading body can be introduced into interdental spaces (10) and is provided with opposite working surfaces (2, 3) on both sides, and which comprises a shaft (6) for attachment to a lift drive mechanism (8), wherein the dental abrading body (1) can be introduced vertically between the teeth (9), i.e. in the longitudinal direction thereof, and is configured for an abrasion movement in said direction, wherein the one working surface (3) is convex in cross-section and the opposite working surface (2) is concave in cross-section, **characterised in that** the radius (R3) of the convex working surface (3) is greater than the radius (R2) of the concave working surface (2).

2. Dental abrading body (1) according to claim 1, **characterised in that** the working surfaces (2, 3) are coated with an abrasive material (4).

3. Dental abrading body (1) according to claim 1, **characterised in that** only the convex working surface (3) is coated with an abrasive material (4).

4. Dental abrading body (1) according to any one of the preceding claims, **characterised in that** the abrasive material (4) is a diamond coating.

5. Dental abrading body (1) according to any one of the preceding claims, **characterised in that** a leading edge (5) of the dental abrading body (1), with which said abrading body may be introduced between the teeth (9), has no abrasive material (4).

6. Dental abrading body (1) according to any one of the preceding claims, **characterised in that** the leading edge (5) of the dental abrading body (1), with which said abrading body may be introduced between the teeth (9), is tapered.

## Revendications

1. Corps abrasif dentaire (1) destiné à traiter un étroit interstice entre les dents (9), qui peut être enfilé dans les espaces entre dents (10) et est muni sur les deux côtés de surfaces de travail (2, 3) mutuellement opposées, et qui présente une tige (6) servant à le fixer à un entraînement alternatif (8), le corps abrasif dentaire (1) pouvant être enfilé verticalement entre les dents (9), c'est-à-dire dans leur direction longitudinale, et étant configuré pour décrire un mouvement d'abrasion dans cette direction, et l'une des surfaces de travail (3) étant configurée avec une forme convexe en section transversale, tandis que la surface de travail opposée (2) est conformée avec un forme concave en section transversale, **caractérisé en ce que** le rayon (R3) de la surface de travail convexe (3) est plus grand que le rayon (R2) de la surface de travail concave (2).

2. Corps abrasif dentaire (1) selon la revendication 1, **caractérisé en ce que** les surfaces de travail (2, 3) sont garnies d'un abrasif (4).

3. Corps abrasif dentaire (1) selon la revendication 1, **caractérisé en ce que** seule la surface de travail convexe (3) est garnie d'un abrasif (4).

4. Corps abrasif dentaire (1) selon une des revendications précédentes, **caractérisé en ce que** l'abrasif (4) est une couche de diamant.

5. Corps abrasif dentaire (1) selon une des revendications précédentes, **caractérisé en ce qu'**un bord avant (5) du corps abrasif dentaire (1) avec lequel ce corps peut être enfilé entre les dents (9) est exempt d'abrasif (4).

6. Corps abrasif dentaire (1) selon une des revendications précédentes, **caractérisé en ce que** le bord avant (5) du corps abrasif dentaire (1) avec lequel ce corps peut être enfilé entre les dents (9) est effilé.
